# NEUE EUROPÄISCHE PATENTSCHRIFT

(11) **EP 3 638 556 B2**
(45) Veröffentlichungstag und Bekanntmachung des Hinweises auf die Entscheidung über den Einspruch: **01.01.2025**
(45) Hinweis auf die Patenterteilung: 17.03.2021
(21) Anmeldenummer: 18732677.2
(22) Anmeldetag: 04.06.2018
(51) Int. Cl.: B60T 17/00

(54) **VERFAHREN UND VORRICHTUNG ZUM STEUERN EINER DRUCKLUFTVERSORGUNG**
METHOD AND DEVICE FOR CONTROLLING SUPPLY OF PRESSURISED AIR
MÉTHODE ET SYSTÈME POUR RÊGLER L'APPROVISIONNEMENT D'AIR SOUS PRESSION

(30) Priorität: 13.06.2017 DE 102017209992
(43) Veröffentlichungstag der Anmeldung: 22.04.2020
(73) Patentinhaber: KNORR-BREMSE Systeme für Schienenfahrzeuge GmbH, 80809 München (DE)
(72) Erfinder: WINKLER, Michael, 80807 München (DE); KIPP, Thomas, 81547 München (DE); BAUMGARTNER, Michael, 81539 München (DE)
(74) Vertreter: Prüfer & Partner mbB Patentanwälte · Rechtsanwälte
(86) Internationale Anmeldenummer: PCT/EP2018/064605
(87) Internationale Veröffentlichungsnummer: WO 2018/228842

(56) Entgegenhaltungen:
- CN-A- 200510 054 802
- DE-A1- 102015 116 148
- JP-A- 2012 154 294
- US-A1- 2007 077 151
- US-B1- 6 233 954

## Beschreibung

Die vorliegende Erfindung betrifft ein Verfahren und eine Vorrichtung zum Steuern einer Druckluftversorgung von Schienenfahrzeugen.

Die Druckluftversorgung von Schienenfahrzeugen hat üblicherweise wenigstens ein Druckreservoir zum Bereitstellen von Druckluft, das zum Beispiel in Form einer Hauptluftleitung und/oder eines Druckluftspeichers ausgestaltet ist. Umfasst die Druckluftversorgung nicht nur einen, sondern mehrere Kompressoren zum Speisen des wenigstens einen Druckluftreservoirs mit Druckluft, so ist ein Kompressor-Management notwendig.

So beschreibt zum Beispiel die EP 1 334 019 B1 der Anmelderin ein Kompressor-Management für eine Druckmittelversorgung von Schienenfahrzeugen, bei dem für die im Zugverband verfügbaren Kompressoren eine Prioritätsreihenfolge definiert wird und abhängig vom aktuellen Druckmittelbedarf nur diejenige Anzahl von Kompressoren gemäß der Reihenfolge ihrer Prioritäten in Betrieb genommen wird, welche zur Deckung des aktuellen Druckmittelbedarfs erforderlich ist. Die Prioritätsreihenfolge der Kompressoren kann nach der Zusammenstellung des Zugverbandes unverändert definiert bleiben oder zeitgesteuert / druckgesteuert / temperaturgesteuert / feuchtigkeitsgesteuert verändert werden.

DE 10 2015 116 148 A1 offenbart ein Verfahren sowie eine Vorrichtung zum Steuern einer Druckluftversorgung, insbesondere von einem Schienenfahrzeug. Die Druckluftversorgung weist ein Druckluftreservoir und mehrere Kompressoren zum Speisen des Druckluftreservoirs mit Druckluft auf. Ferner ist in diesem Dokument offenbart, dass die zur Verfügung stehenden Kompressoren identifiziert werden, die identifizierten Kompressoren in wenigstens einen Master und wenigstens einen Slave eingeteilt werden und die identifizierten Kompressoren entsprechend ihrer Einteilung in Master und Slave und abhängig von einem Druckluftbedarf in dem Druckluftreservoir betrieben werden, wobei die als Master klassifizierten Kompressoren vorrangig betrieben werden.

Auch in US 2007/0077151 A1 ist eine Vorrichtung zum Steuern einer Druckluftversorgung offenbart, wobei die Kompressoren ebenfalls in einen Master und Slave eingeteilt werden und die Kompressoren entsprechend ihrer Einteilung in Master und Slave und abhängig von einem Druckluftbedarf in dem Druckluftreservoir betrieben werden.

Aufgabe der vorliegenden Erfindung ist es, ein verbessertes Kompressor-Management für eine Druckluftversorgung mit mehreren Kompressoren bereitzustellen.

Diese Aufgabe wird gelöst durch die Lehre der unabhängigen Ansprüche. Besonders vorteilhafte Ausführungsformen der Erfindung sind Gegenstand der abhängigen Ansprüche.

Das erfindungsgemäße Verfahren zum Steuern einer Druckluftversorgung von Schienenfahrzeugen, wobei die Druckluftversorgung wenigstens eine Hauptluftleitung als ein in dem Schienenfahrzeug oder einem Zugverbund aus mehreren Schienenfahrzeugen angeordnetes Druckluftreservoir zum Bereitstellen von Druckluft und mehrere in dem Schienenfahrzeug oder einem Zugverbund aus mehreren Schienenfahrzeugen angeordneten Kompressoren zum Speisen des wenigstens einen Druckluftreservoirs mit Druckluft aufweist, enthält die Schritte des Identifizierens der zur Verfügung stehenden Kompressoren; des Einteilens der identifizierten Kompressoren in wenigstens einen Master und wenigstens einen Slave; und des Betreibens der identifizierten Kompressoren entsprechend ihrer Einteilung in Master und Slave und abhängig von einem Druckluftbedarf in dem wenigstens einen Druckluftreservoir, wobei die als Master klassifizierten Kompressoren vorrangig betrieben werden, wobei das Einteilen der identifizierten Kompressoren in Abhängigkeit von den Kompressorlaufzeiten der Kompressoren, einer Leistungsfähigkeit der Kompressoren, oder einer Schnelligkeit des Erfüllens eines Druckluftbedarfs erfolgt.

Erfindungsgemäß wird vorgeschlagen, die zur Verfügung stehenden Kompressoren der Druckluftversorgung in Master und Slaves einzuteilen und dann abhängig vom Druckluftbedarf die als Master klassifizierten Kompressoren vorrangig vor den als Slave klassifizierten Kompressoren zu betreiben. Je nachdem, nach welchen Kriterien die Unterteilung der Kompressoren in Master und Slave erfolgt, kann das Kompressor-Management unter verschiedenen Aspekten optimiert werden. Erfindungsgemäß erfolgt die Einteilung nach Leistungsfähigkeit der Kompressoren, bereits geleisteter Laufzeiten der Kompressoren, oder Schnelligkeit des Erfüllens des Druckluftdarfs.

Der Begriff Druckluftreservoir soll in diesem Zusammenhang alle Einrichtung und Systeme bezeichnen, die geeignet sind, einem oder mehreren Verbrauchern (z.B. Bremssysteme von Schienenfahrzeugen) Druckluft bereitzustellen. Zu den geeigneten Druckluftreservoiren zählen insbesondere Druckluftbehälter und Druckluftleitungen (z.B. Hauptluftleitungen von Schienenfahrzeugen).

Das Identifizieren der zur Verfügung stehenden Kompressoren umfasst vorzugsweise die Schritte des Erfassens, welche und wie viele Kompressoren zur Verfügung stehen, und des Zuordnens von eindeutigen Identifikationsbezeichnungen zu den erfassten Kompressoren. Von den zur Verfügung stehenden Kompressoren werden dabei vorzugsweise nur die funktionsfähigen Kompressoren als verfügbare Kompressoren berücksichtigt.

In einer vorteilhaften Ausgestaltung der Erfindung erfolgt das Einteilen der identifizierten Kompressoren in wenigstens einen Master und wenigstens einen Slave in Abhängigkeit von den Kompressorlaufzeiten der Kompressoren. Vorzugsweise werden dabei jene Kompressoren mit den geringsten Kompressorlaufzeiten als Master klassifiziert. Unter dem Begriff Kompressorlaufzeitsoll dabei vorzugsweise nur die aktive Laufzeit des Kompressors, d.h. seine Betriebszeit ohne Stand-bγ-Zeiten verstanden werden. Mit dieser Ausgestaltung der Erfindung werden jeweils vorrangig jene Kompressoren in Betrieb genommen, die bisher eine geringere Kompressorlaufzeit aufweisen. Kompressoren mit geringerer Laufzeit werden so öfter geschalten als Kompressoren mit höherer Laufzeit. Auf diese Weise können die Kompressorlaufzeiten und Belastungen aller verfügbaren Kompressoren gleichmäßiger verteilt bzw. homogenisiert werden. Als Folge davon können auch die Wartungsintervalle und die Lebensdauern dieser Kompressoren homogenisiert werden bzw. haben die Kompressoren bei gemeinsamen Wartungsintervallen ungefähr gleiche Kompressorlaufzeiten.

Besonders bei einer großen Anzahl an Kompressoren in der Druckluftversorgung kann diese Homogenisierung besser als mit herkömmlichen Regeln / Logiken erzielt werden. Das beschriebene Balancing der Kompressoren ist dabei vorteilhafterweise auch unabhängig von der Formation der Druckluftversorgung, d.h. zum Beispiel unabhängig von einer Zugformation aus Schienenfahrzeugen. Das erfindungsgemäße Verfahren bietet dabei seine Vorteile insbesondere auch bei sich (dynamisch) verändernden Zugformationen und Kompressoranzahlen. Bei einer Veränderung der Druckluftversorgung zum Beispiel bei einer neuen Formation eines Zugverbundes müssen keine neuen Regeln für das Kompressor-Management definiert werden, da die Kompressorlaufzeiten aller Kompressoren des neuen Zugverbundes in die vorhandene Logik integriert werden.

In einer Ausgestaltung der Erfindung wird der Schritt des Einteilens der identifizierten Kompressoren in wenigstens einen Master und wenigstens einen Slave nach einer vorbestimmten Zeitdauer erneut durchgeführt. Bei der vorbestimmten Zeitdauer kann es sich zum Beispiel um 12 Stunden oder 24 Stunden handeln. Mit dieser Ausgestaltung werden die verfügbaren Kompressoren in regelmäßigen Zeitabständen immer wieder neu in Master und Slave eingeteilt, sodass die Nutzung der Kompressoren weiter optimiert werden kann. Im Fall des laufzeitoptimierten Kompressor-Managements können so die Kompressorlaufzeiten aller verfügbaren Kompressoren noch besser homogenisiert werden.

In einer weiteren Ausgestaltung der Erfindung enthält der Schritt des Einteilens der identifizierten Kompressoren in wenigstens einen Master und wenigstens einen Slave einen Schritt des Bestimmens einer Anzahl m der als Master zu klassifizierenden Kompressoren, wobei die Anzahl m der Master kleiner als die Anzahl n der zuvor identifizierten Kompressoren ist.

Vorzugsweise werden bei diesem Einteilen der identifizierten Kompressoren alle identifizierten Kompressoren, die nicht als Master klassifiziert werden, als Slave klassifiziert.

Vorzugsweise ist bei diesem Einteilen der identifizierten Kompressoren eine Anzahl s der als Slave zu klassifizierenden Kompressoren größer oder gleich der Anzahl m der Master.

Vorzugsweise werden die Anzahl m der Master und die Anzahl s der Slaves möglichst gleich zueinander gewählt. Bevorzugt werden bei einer geradzahligen Anzahl n der verfügbaren Kompressoren die Anzahl m der Master und die Anzahl s der Slaves gleich zueinander (d.h. m=n/2 und s=n/2) gewählt. Bei einer ungeradzahligen Anzahl n der verfügbaren Kompressoren wird die Anzahl m der Master bevorzugt um 1 niedriger als die Anzahl s der Slaves gewählt (d.h. m=(n-1)/2 und s=(n-1)/2+1).

Die Schritte des Identifizierens und des Einteilens der Kompressoren werden vorzugsweise bei einer Formation oder Neu-Formation der Druckluftversorgung (z.B. in Form einer (Neu-)Formation eines Zugverbundes aus Schienenfahrzeugen), bevorzugt bei jeder (Neu-)Formation, und bevorzug automatisch durchgeführt.

In einer weiteren vorteilhaften Ausgestaltung der Erfindung werden die als Master klassifizierten Kompressoren nur dann betrieben, wenn ihre Ruhezeit seit dem letzten Betrieb einen vorbestimmten Ruhezeitwert erreicht hat oder wenn der Druckluftbedarf in dem wenigstens einen Druckluftreservoir einen vorbestimmten Grenzwert überschreitet. D.h. falls die Ruhezeiten seit dem letzten Betrieb der als Master klassifizierten Kompressoren noch nicht ausreichend sind, werden zunächst die als Slave klassifizierten Kompressoren in Betrieb genommen. Nur falls der Druckluftbedarf in dem wenigstens einen Druckluftreservoir besonders hoch ist, werden die als Master klassifizierten Kompressoren trotz ihrer unzureichenden Ruhezeit zusätzlich zu den als Slave klassifizierten Kompressoren in Betrieb genommen.

Mit dieser Ausgestaltung der Erfindung kann erreicht werden, dass die mechanischen Belastungen der Komponenten der Kompressoren reduziert werden. Nach einer ausreichend langen Ruhezeit istzum Beispiel der Gegendruck in der Leitung zwischen Kompressor und Lufttrockner durch die Regenerationsluftdüse des Lufttrockners so weit abgefallen, dass beim Wiedereinschalten des Kompressors keine zusätzliche Belastung auf das Triebwerk und den Pleuelverbund wirkt. Außerdem kann durch das Abwarten einer vorbestimmten Ruhezeit vermieden werden, dass der Kompressor eingeschaltet wird, während er sich noch in einer "Rücklaufphase" befindet, d.h. einer Rückwärtsbewegung des Pleuels und der Kurbelwelle infolge einer nicht vollständig abgeschlossenen Verdichtungsphase. Ein Einschalten des Kompressors während einer solchen Rücklaufphase würde in hohen mechanischen Belastungen auf die Komponenten des Kompressors resultieren.

Falls die als Master klassifizierten Kompressoren betrieben werden, können abhängig von dem Druckluftbedarf in dem wenigstens einen Druckluftreservoir zusätzlich auch die als Slave klassifizierten Kompressoren in Betrieb genommen werden. D.h. bei einem hohen Druckluftbedarf werden vorzugsweise alle verfügbaren Kompressoren betrieben, um den Druckluftbedarf möglichst sicher und schnell zu erfüllen.

In Zusammenhang mit der Erfindung soll das Betreiben der als Master klassifizierten Kompressoren sowohl das Betreiben aller Kompressoren, die als Master klassifiziert worden sind, als auch das Betreiben nur einer Teilanzahl der als Master klassifizierten Kompressoren, die zum Erfüllen des aktuellen Druckluftbedarfs als ausreichend angesehen wird, umfassen. Die Auswahl hängt insbesondere vom jeweiligen Anwendungsfall und/oder vom aktuellen Druckluftbedarf ab. Beim Betreiben einer Teilanzahl der als Master klassifizierten Kompressoren werden vorzugsweise vorrangig jene Kompressoren mit geringeren Kompressorlaufzeiten betrieben.

Die Vorrichtung zum Steuern einer Druckluftversorgung, die wenigstens ein Druckluftreser voir zum Bereitstellen von Druckluft und mehrere Kompressoren zum Speisen des wenigstens einen Druckluftreservoirs mit Druckluft aufweist, hat Mittel zum Identifizieren der zur Verfügung stehenden Kompressoren; Mittel zum Einteilen der identifizierten Kompressoren in wenigstens einen Master und wenigstens einen Slave; wenigstens eine Druckerfassungsvorrichtung zum Erfassen eines Druckluftbedarfs in dem wenigstens einen Druckluftreservoir; und Mittel zum Ansteuern der identifizierten Kompressoren entsprechend ihrer Einteilung in Master und Slave und abhängig von dem erfassten Druckluftbedarf in dem wenigstens einen Druckluftreservoir, wobei die als Master klassifizierten Kompressoren vorrangig betrieben werden. Erfindungsgemäß wird vorgeschlagen, die zur Verfügung stehenden Kompressoren der Druckluftversorgung in Master und Slaves einzuteilen und dann abhängig vom Druckluftbedarf die als Master klassifizierten Kompressoren vorrangig vor den als Slave klassifizierten Kompressoren zu betreiben. Je nachdem, nach welchen Kriterien die Unterteilung der Kompressoren in Master und Slave erfolgt, kann das Kompressor-Management unter verschiedenen Aspekten optimiert werden. Erfindungsgemäß erfolgt die Einteilung nach Leistungsfähigkeit der Kompressoren, bereits geleisteter Laufzeiten der Kompressoren, Schnelligkeit des Erfüllens des Druckluftbedarfs.

Die erfindungsgemäße Vorrichtung steuert eine Druckluftversorgung von Schienenfahrzeugen. Dabei können sowohl Druckluftversorgungen einzelner Schienenfahrzeuge als auch Druckluftversorgungen von Zugverbünden aus mehreren Schienenfahrzeugen gesteuert.

Der Begriff Druckluftreservoir soll in diesem Zusammenhang alle Einrichtung und Systeme bezeichnen, die geeignet sind, einem oder mehreren Verbrauchern (z.B. Bremssysteme von Schienenfahrzeugen) Druckluft bereitzustellen. Zu den geeigneten Druckluftreservoiren zählen insbesondere Druckluftbehälter und Druckluftleitungen (z.B. Hauptluftleitungen von Schienenfahrzeugen).

Die Mittel zum Identifizieren der zur Verfügung stehenden Kompressoren, die Mittel zum Einteilen der identifizierten Kompressoren und die Mittel zum Ansteuern der identifizierten Kompressoren können wahlweise durch separate Komponenten realisiert sein oder in eine gemeinsame Komponente integriert sein. Bei der gemeinsamen Komponente oder der die einzelnen Komponenten koordinierenden Komponente handelte es sich vorzugsweise um eine Steuereinrichtung, im Fall von Schienenfahrzeugen bevorzugt um eine Bremssteuerung oder eine Fahrzeugsteuerung.

In einer Ausgestaltung der Erfindung ist ferner ein Mittel zum Erfassen der Kompressorlaufzeiten der identifizierten Kompressoren vorgesehen. Bei dieser Ausgestaltung ist das Mittel zum Einteilen der identifizierten Kompressoren vorzugsweise ausgestaltet, um die identifizierten Kompressoren in Abhängigkeit von den erfassten Kompressorlaufzeiten der Kompressoren in wenigstens einen Master und wenigstens einen Slave einzuteilen.

In einer weiteren Ausgestaltung der Erfindung ist ferner ein Mittel zum Erfassen der Ruhezeiten der Kompressoren seit ihrem letzten Betrieb vorgesehen. Bei dieser Ausgestaltung ist das Mittel zum Ansteuern der identifizierten Kompressoren vorzugsweise ausgestaltet, um die als Master klassifizierten Kompressoren nur dann zu betreiben, wenn ihre erfasste Ruhezeit seit dem letzten Betrieb einen vorbestimmten Ruhezeitwert erreicht hat oder wenn der erfasste Druckluftbedarf in dem wenigstens einen Druckluftreservoir einen vorbestimmten Grenzwert überschreitet.

Obige sowie weitere Vorteile, Merkmale und Anwendungsmöglichkeiten der Erfindung werden aus der nachfolgenden Beschreibung von Ausführungsbeispielen anhand der beiliegenden Zeichnungen besser verständlich. Darin zeigen, zum Teil schematisch:
- Fig. 1: eine stark vereinfachte Darstellung einer Druckluftversorgung von Schienenfahrzeugen, bei welcher die vorliegende Erfindung einsetzbar ist;
- Fig. 2: ein Flussdiagramm eines Verfahrens zum Steuern einer Druckluftversorgung gemäß der vorliegenden Erfindung;
- Fig. 3: ein Flussdiagramm des Teilschritts S200 von Fig. 2 gemäß einem Ausführungsbeispiel der Erfindung; und
- Fig. 4: ein Flussdiagramm des Teilschritts S300 von Fig. 2 gemäß einem Ausführungsbeispiel der vorliegenden Erfindung.

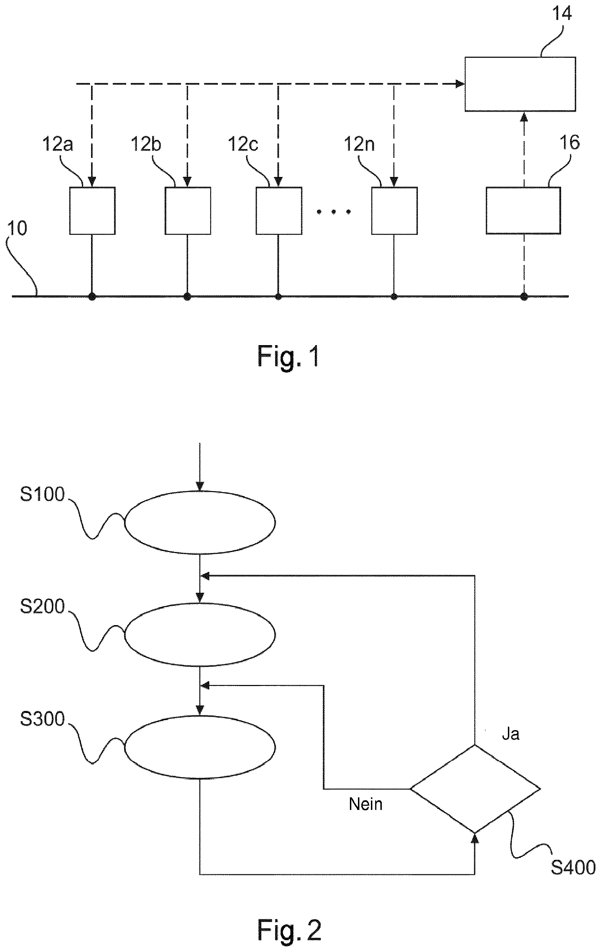

Fig. 1 zeigt zunächst stark vereinfacht den Aufbau einer Druckluftversorgung für Schienenfahrzeuge.

Die Druckluftversorgung umfasst erfindungsgemüß eine Hauptluftleitung 10 als Druckluftreservoir, an der verschiedene Druckluftverbraucher (z.B. Fahrzeugbremsen) angeschlossen sein können, um mit Druckluft versorgt zu werden. Die Hauptluftleitung 10 wird von mehreren Kompressoren 12a, 12b, 12c, ... 12n mit Druckluft gespeist. Neben der Hauptluftleitung 10 können auch noch ein oder mehrere Druckluftbehälter als Druckluftreservoir für Druckluftverbraucher vorgesehen sein. Die Hauptluftleitung 10 und die mehreren Kompressoren 12a...n sind erfindungsgemäß in einem Schienenfahrzeug oder einem Zugverbund aus mehreren Schienenfahrzeugen angeordnet.

Die mehreren Kompressoren 12a...n sind mit einer Steuereinrichtung 14 verbunden (z.B. drahtlos oder leitungsgebunden). Die Steuereinrichtung 14 empfängt einerseits Betriebsdaten von den verschiedenen Kompressoren 12a... n und steuert andererseits die mehreren Kompressoren 12a...n an. Bei der Steuereinrichtung 14 handelt es sich zum Beispiel um eine zentrale Bremssteuerung oder eine zentrale Fahrzeugsteuerung des Schienenfahrzeugs oder des Zugverbunds aus mehreren Schienenfahrzeugen.

Wie in Fig. 1 veranschaulicht, ist zudem eine Druckerfassungsvorrichtung 16 zum Beispiel in Form eines Druckwächters oder Drucksensors vorgesehen, die mit der Hauptluftleitung 10 gekoppelt ist, um den vorhandenen Druck bzw. den Druckluftbedarf in der Hauptluftleitung 10 zu erfassen. Die Druckerfassungsvorrichtung 16 leitet die Erfassungsergebnisse an die Steuereinrichtung 14 weiter, damit diese die Kompressoren 12a...n in Abhängigkeit vom aktuellen Druckluftbedarf in der Hauptluftleitung 10 ansteuern kann.

Fig. 2 zeigt zunächst den groben Ablauf des erfindungsgemäßen Verfahrens zum Steuern einer solchen Druckluftversorgung.

Zu Beginn, d.h. zum Beispiel nach der Formation eines Zugverbundes aus mehreren Schienenfahrzeugen, werden in einem Schritt S100 die zur Verfügung stehenden Kompressoren identifiziert. Diese Identifizierung erfasst insbesondere ein Ermitteln der verfügbaren Kompressoren 12a...n und ein Zuordnen eindeutiger Identifikationszeichen (z.B. C1, C2, C3, usw.) zu den ermittelten Kompressoren 12a...n. In Bezug auf die vorliegende Erfindung können diese Identifikationszeichen den einzelnen Kompressoren 12a...n willkürlich zugeordnet werden.

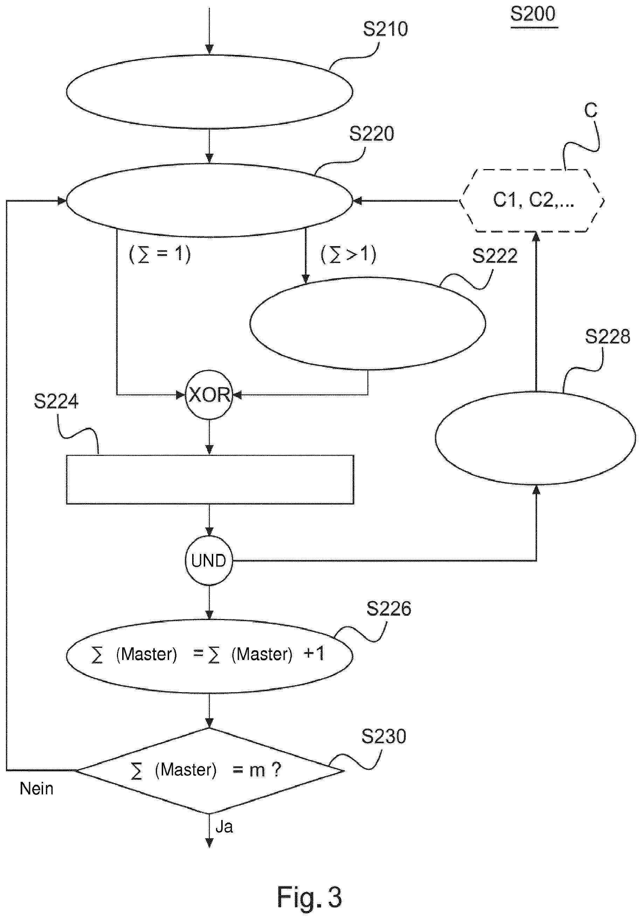

In einem nächsten Schritt S200 werden die in Schritt S100 identifizierten Kompressoren 12a...n in wenigstens einen Master und wenigstens einen Slave eingeteilt. Diese Einteilung erfolgt vorzugsweise laufzeitabhängig. Eine mögliche Ausführungsvariante dieses Schritts S200 wird weiter unten anhand von Fig. 3 erläutert.

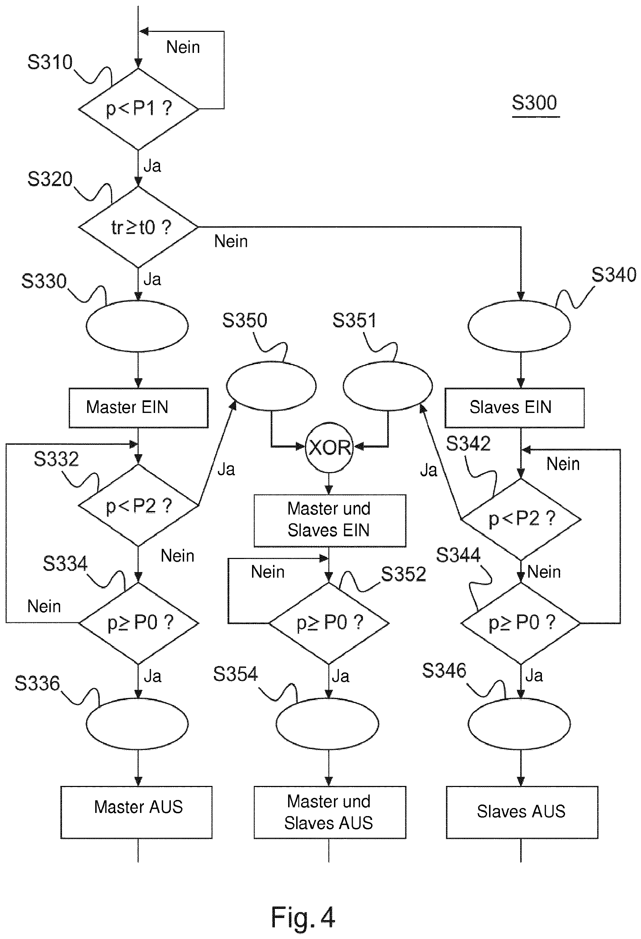

Anschließend werden in Schritt S300 die in Schritt S100 identifizierten Kompressoren 12a..n entsprechend ihrer Einteilung in Master und Slave und abhängig von dem mittels der Druckerfassungsvorrichtung 16 erfassten Druckluftbedarf in der Hauptluftleitung 10 betrieben. Dabei werden die in Schritt S200 als Master klassifizierten Kompressoren vorrangig vor den in Schritt S200 als Slave klassifizierten Kompressoren betrieben. Eine mögliche Ausführungsvariante dieses Schritts S300 wird weiter unten anhand von Fig. 4 erläutert.

Nach Beendigung des Betriebs der Kompressoren in Schritt S300 wird überprüft, wie lange die letzte Einteilung der Kompressoren 12a...n in Master und Slave zurückliegt. So wird in Schritt S400 zum Beispiel geprüft, ob eine vorbestimmte Zeitdauer (z.B. 12 Stunden oder 24 Stunden) seit der letzten Ausführung von Schritt S200 verstrichen ist oder nicht. Falls nicht, werden die Kompressoren 12a...n bei einem erneut festgestellten Druckluftbedarf in der Hauptluftleitung 10 wieder nach der bestehenden Einteilung in Master und Slave betrieben. Falls doch, werden die Kompressoren 12a...n in Schritt S200 neu eingeteilt. Da das Kriterium für die Einteilung der Kompressoren 12a...n (z.B. Kompressorlaufzeit) nach einer bestimmten Betriebsdauer der Kompressoren zu einer anderen Einteilung führen kann, kann auf diese Weise das Kompressor-Management weiter verbessert werden.

Fig. 3 zeigt ein konkretes Ausführungsbeispiel für die Durchführung des obigen Verfahrensschritts S200.

Als erstes wird in einem Schritt S210 die Anzahl m der als Master zu klassifizierenden Kompressoren bestimmt. Hierzu wird zunächst die Anzahl n der zur Verfügung stehenden Kompressoren 12a...n, die in Schritt S100 identifiziert worden sind, ermittelt. Aus dieser Anzahl n werden die Anzahl m der als Master zu klassifizierenden Kompressoren und die Anzahl s der als Slave zu klassifizierenden Kompressoren zum Beispiel nach der folgenden Tabelle bestimmt.

| | | | | |
|---|---|---|---|---|
| Anzahl n der Kompressoren: | geradzahlig | (z.B. 10) | ungeradzahlig | (z.B. 11) |
| Anzahl m der Master: | n/2 | (z.B. 5) | (n-1) / 2 | (z.B. 5) |
| Anzahl s der Slaves: | n/2 | (z.B. 5) | (n-1) / 2 + 1 | (z.B. 6) |

Dann wird in Schritt S220 der Kompressor mit der geringsten Kompressorlaufzeit (ohne Stand-by-Zeiten) aus der Gruppe C der identifizierten Kompressoren bestimmt. Ist diese Bestimmung eindeutig (∑=1), so wird dieser eine Kompressor als Master klassifiziert (Schritt S224). Gibt es mehrere Kompressoren mit der gleichen geringsten Kompressorlaufzeit (∑>1), so wird in Schritt S222 aus diesen zunächst einer ausgewählt (z.B. jener mit dem niedrigsten alphanumerischen Identifikationszeichen) und dann dieser ausgewählte Kompressor als Master klassifiziert (Schritt S224).

In Schritt S226 wird dann die Anzahl ∑(Masters) der bereits als Master klassifizierten Kompressoren um 1 erhöht. Parallel dazu wird der in Schritt S224 als Master klassifizierte Kompressor in einem Schritt S228 aus der Gruppe C der identifizierten Kompressoren entfernt, sodass er in dieser Prozessschleife nicht noch einmal als Master ausgewählt werden kann.

Danach wird in Schritt S230 geprüft, ob bereits eine ausreichende Anzahl an Kompressoren als Master klassifiziert worden ist. Falls dies der Fall ist, wird der Verfahrensschritt S200 abgeschlossen und das Verfahren geht weiter zu Schritt S300. Falls dies nicht der Fall ist, geht der Prozessablauf zurück zu Schritt S220, um einen weiteren Kompressor aus der Gruppe C der identifizierten Kompressoren als Master zu klassifizieren.

Alle Kompressoren 12a...n, die nach Abschluss des Verfahrensschritts S200 nicht als Master klassifiziert worden sind, werden als Slave klassifiziert.

Fig. 4 zeigt ein konkretes Ausführungsbeispiel für die Durchführung des obigen Verfahrensschritts S300.

In Schritt S310 wird geprüft, ob der durch die Druckerfassungsvorrichtung 16 erfasste Druck p in der Hauptluftleitung 10 einen vorbestimmten ersten Druckwert P1 von beispielsweise 8,5 bar unterschreitet und damit ein Druckluftbedarf herrscht. Falls dies der Fall ist, steuert die Steuereinrichtung 14 die Kompressoren 12a...n in der nachfolgend beschriebenen Weise an, um wieder einen ausreichenden Druck in der Hauptluftleitung 10 zu erzeugen.

Dann wird in Schritt S320 geprüft, ob die Ruhezeit tr der als Master klassifizierten Kompressoren seit Beendigung der letzten Betriebsphase einen vorbestimmten Zeitwert t0 von beispielsweise 30 sec erreicht hat. Der vorbestimmte Zeitwert t0 ergibt sich beispielsweise aus der Dauer des Druckabbaus in den Zylindern des Kompressors, der Dauer des Druckabbaus zwischen Kompressor und Lufttrockner, der maximalen Dauer einer Rücklaufphase des Kompressors, etc. und Kombinationen dieser Parameter. Falls die Ruhezeit tr der als Master klassifizierten Kompressoren ausreichend ist, werden in Schritt S330 diese als Master klassifizierten Kompressoren in Betrieb genommen.

Während des Betriebs der Kompressoren, wird der Druck p in der Hauptluftleitung 10 fortlaufend weiter überwacht. In Schritt S332 wird geprüft, ob der durch die Druckerfassungsvorrichtung 16 erfasste Druck p in der Hauptluftleitung 10 einen vorbestimmten zweiten Druckwert P2, der niedriger als der vorbestimmte erste Druckwert P1 ist, unterschreitet. Der zweite Druckwert P2 beträgt beispielsweise 7,5 bar.

Falls dies nicht der Fall ist, bleibt die Ansteuerung der Kompressoren durch die Steuereinrichtung 14 zunächst unverändert und es wird in Schritt S334 geprüft, ob der durch die Druckerfassungsvorrichtung 16 erfasste Druck p in der Hauptluftleitung 10 durch den Betrieb der Kompressoren wieder einen vorbestimmten Basisdruckwert P0 erreicht hat, der höher als der vorbestimmte erste Druckwert P1 ist. Der Basisdruckwert P0 beträgt beispielsweise 10 bar.

Falls dies der Fall ist, können die als Master klassifizierten Kompressoren in Schritt S336 von der Steuereinrichtung 14 wieder abgeschaltet werden, da der Druck in der Hauptluftleitung 10 wieder ausreichend ist. Der Verfahrensschritt S300 ist damit beendet. Falls dies hingegen nicht der Fall ist, d.h. falls der Druck in der Hauptluftleitung 10 noch nicht wieder ausreichend ist, geht der Prozessablauf zurück zu Schritt S332, um die Kompressoren weiter zu betreiben und den Druck p weiter zu überwachen.

Falls in Schritt S320 entscheiden wird, dass die Ruhezeit tr der als Master klassifizierten Kompressoren noch nicht ausreichend ist, werden in Schritt S340 die als Slave klassifizierten Kompressoren in Betrieb genommen. So können mechanische Belastungen der Komponenten der Kompressoren vermieden oder zumindest reduziert werden, die noch nicht wieder vollständig bzw. optimal betriebsbereit sind.

Analog zu den oben beschriebenen Verfahrensschritten S332 bis S336 wird auch während des Betriebs der als Slave klassifizierten Kompressoren der Druck p in der Hauptluftleitung 10 fortlaufend überwacht. In Schritt S342 wird geprüft, ob der durch die Druckerfassungsvorrichtung 16 erfasste Druck p in der Hauptluftleitung 10 einen vorbestimmten zweiten Druckwert P2, der niedriger als der vorbestimmte erste Druckwert P1 ist und der bevorzugt mit dem zweiten Druckwert P2 in Schritt S332 übereinstimmt, unterschreitet.

Falls dies nicht der Fall ist, bleibt die Ansteuerung der Kompressoren durch die Steuereinrichtung 14 zunächst unverändert und es wird in Schritt S344 geprüft, ob der durch die Druckerfassungsvorrichtung 16 erfasste Druck p in der Hauptluftleitung 10 durch den Betrieb der Kompressoren wieder einen vorbestimmten Basisdruckwert P0 erreicht hat, der höher als der vorbestimmte erste Druckwert P1 ist und der bevorzugt mit dem Basisdruckwert P0 in Schritt S334 übereinstimmt.

Falls dies der Fall ist, können die als Slave klassifizierten Kompressoren in Schritt S346 von der Steuereinrichtung 14 wieder abgeschaltet werden, da der Druck in der Hauptluftleitung 10 wieder ausreichend ist. Der Verfahrensschritt S300 ist damit beendet. Falls dies hingegen nicht der Fall ist, d.h. falls der Druck in der Hauptluftleitung 10 noch nicht wieder ausreichend ist, geht der Prozessablauf zurück zu Schritt S342, um die Kompressoren weiter zu betreiben und den Druck p weiter zu überwachen.

Während des Betriebs der als Master klassifizierten Kompressoren (Schritte S330 bis S336) oder der als Slave klassifizierten Kompressoren (Schritte S340 bis 346) besteht zudem die Möglichkeit, dass die Drucklufterzeugung nicht ausreicht und der Druck in der Hauptluftleitung 10 weiter sinkt. In diesem Fall wird in Schritt S332 bzw. S342 festgestellt, dass der Druck p in der Hauptluftleitung 10 den vorbestimmten zweiten Druckwert P2 unterschreitet, sodass der Prozessablauf zu Schritt S350 bzw. S351 weitergeht. Ausgehend vom Betrieb der als Master klassifizierten Kompressoren (S330) werden in Schritt S350 die als Slave klassifizierten Kompressoren hinzugeschaltet, und ausgehend vom Betrieb der als Slave klassifizierten Kompressoren (S340) werden in Schritt S351 die als Master klassifizierten Kompressoren hinzugeschaltet. In jedem Fall sind dann alle verfügbaren Kompressoren in Betrieb, d.h. sowohl die als Master klassifizierten Kompressoren als auch die als Slave klassifizierten Kompressoren. Anschließend wird auch in diesem Prozessablaufzweig der Druck p in der Hauptluftleitung 10 weiter überwacht. In Schritt S352 wird geprüft, ob der durch die Druckerfassungsvorrichtung 16 erfasste Druck p in der Hauptluftleitung 10 durch den Betrieb aller Kompressoren wieder den Basisdruckwert P0 erreicht hat, der vorzugsweise mit dem Basisdruckwert in Schritt S334 und/oder Schritt S344 übereinstimmt. Falls dies der Fall ist, können die Kompressoren in Schritt S354 von der Steuereinrichtung 14 wieder abgeschaltet werden, da der Druck in der Hauptluftleitung 10 wieder ausreichend ist. Der Verfahrensschritt S300 ist damit beendet. Falls dies hingegen nicht der Fall ist, d.h. falls der Druck in der Hauptluftleitung 10 noch nicht wieder ausreichend ist, geht der Prozessablauf zurück zu Schritt S352, um die Kompressoren alle weiter zu betreiben und den Druck p weiter zu überwachen.

### BEZUGSZEICHENLISTE

- 10: Druckluftreservoir, z.B. Hauptluftleitung
- 12a..n: Kompressoren
- 14: Steuereinrichtung, z.B. Bremssteuerung
- 16: Druckerfassungsvorrichtung, z.B. Druckwächter

## Patentansprüche

1. Verfahren zum Steuern einer Druckluftversorgung von Schienenfahrzeugen, wobei die Druckluftversorgung wenigstens eine Hauptluftleitung als ein in dem Schienenfahrzeug oder einem Zugverbund aus mehreren Schienenfahrzeugen angeordnetes Druckluftreservoir (10) zum Bereitstellen von Druckluft und mehrere in dem Schienenfahrzeug oder einem Zugverbund aus mehreren Schienenfahrzeugen angeordnete Kompressoren (12a..n) zum Speisen des wenigstens einen Druckluftreservoirs (10) mit Druckluft aufweist, mit den Schritten:
- Identifizieren (S100) der zur Verfügung stehenden Kompressoren (12a..n);
- Einteilen (S200) der identifizierten Kompressoren (12a..n) in wenigstens einen Master und wenigstens einen Slave, und
- Betreiben (S300) der identifizierten Kompressoren (12a..n) entsprechend ihrer Einteilung in Master und Slave und abhängig von einem Druckluftbedarf in dem wenigstens einen Druckluftreservoir (10), wobei die als Master klassifizierten Kompressoren vorrangig betrieben werden,
wobei das Einteilen der identifizierten Kompressoren (12a..n) in Schritt S200 in Abhängigkeit von den Kompressorlaufzeiten der Kompressoren (12a..n), einer Leistungsfähigkeit der Kompressoren (12a..n), oder einer Schnelligkeit des Erfüllens eines Druckluftbedarfs erfolgt.

2. Verfahren nach Anspruch 1, bei welchem
der Schritt S200 des Einteilens der identifizierten Kompressoren (12a..n) nach einer vorbestimmten Zeitdauer erneut durchgeführt wird.

3. Verfahren nach einem der vorherigen Ansprüche, bei welchem
der Schritt S200 des Einteilens der identifizierten Kompressoren einen Schritt des Bestimmens einer Anzahl m der als Master zu klassifizierenden Kompressoren enthält, wobei die Anzahl m der Master kleiner als die Anzahl n der in Schritt S100 identifizierten Kompressoren ist.

4. Verfahren nach einem der vorhergehenden Ansprüche, bei welchem
die Schritte S100 und S200 des Identifizierens und Einteilens der Kompressoren (12a..n) bei einer Formation oder Neu-Formation der Druckluftversorgung durchgeführt werden.

5. Verfahren nach einem der vorhergehenden Ansprüche, bei welchem
in Schritt S300 die als Master klassifizierten Kompressoren nur dann betrieben werden, wenn ihre Ruhezeit seit dem letzten Betrieb einen vorbestimmten Ruhezeitwert erreicht hat oder wenn der Druckluftbedarf in dem wenigstens einen Druckluftreservoir (10) einen vorbestimmten Grenzwert überschreitet.

6. Verfahren nach einem der vorhergehenden Ansprüche, bei welchem
in Schritt S300, falls die als Master klassifizierten Kompressoren betrieben werden, abhängig von dem Druckluftbedarf in dem wenigstens einen Druckluftreservoir (10) auch die als Slave klassifizierten Kompressoren in Betrieb genommen werden.

7. Vorrichtung zum Steuern einer Druckluftversorgung von Schienenfahrzeugen, wobei die Druckluftversorgung wenigstens eine Hauptluftleitung als ein in dem Schienenfahrzeug oder einem Zugverbund aus mehreren Schienenfahrzeugen angeordnetes Druckluftreservoir (10) zum Bereitstellen von Druckluft und mehrere in dem Schienenfahrzeug oder einem Zugverbund aus mehreren Schienenfahrzeugen angeordnete Kompressoren (12a..n) zum Speisen des wenigstens einen Druckluftreservoirs (10) mit Druckluft aufweist, aufweisend:
Mittel (14) zum Identifizieren der zur Verfügung stehenden Kompressoren (12a..n);
Mittel (14) zum Einteilen der identifizierten Kompressoren (12a..n) in wenigstens einen Master und wenigstens einen Slave;
wenigstens eine Druckerfassungsvorrichtung (16) zum Erfassen eines Druckluftbedarfs in dem wenigstens einen Druckluftreservoir (10); und
Mittel (14) zum Ansteuern der identifizierten Kompressoren (12a..n) entsprechend ihrer Einteilung in Master und Slave und abhängig von dem erfassten Druckluftbedarf in dem wenigstens einen Druckluftreservoir (10), wobei die als Master klassifizierten Kompressoren vorrangig betrieben werden;
wobei das Mittel (14) zum Einteilen der identifizierten Kompressoren (12a..n) in wenigstens einen Master und wenigstens einen Slave dazu konfiguriert ist, das Einteilen der identifizierten Kompressoren (12a..n) in Abhängigkeit von den Kompressorlaufzeiten der Kompressoren (12a..n), einer Leistungsfähigkeit der Kompressoren (12a..n), oder einer Schnelligkeit des Erfüllens eines Druckluftbedarfs durchzuführen.

8. Vorrichtung nach Anspruch 7, ferner mit
einem Mittel (14) zum Erfassen der Kompressorlaufzeiten der identifizierten Kompressoren (12a..n),
wobei das Mittel (14) zum Einteilen der identifizierten Kompressoren ausgestaltet ist, um die identifizierten Kompressoren (12a..n) in Abhängigkeit von den erfassten Kompressorlaufzeiten der Kompressoren (12a..n) in wenigstens einen Master und wenigstens einen Slave einzuteilen.

9. Vorrichtung nach Anspruch 7 oder 8, ferner mit
einem Mittel (14) zum Erfassen der Ruhezeiten der Kompressoren (12a..n) seit ihrem letzten Betrieb,
wobei das Mittel (14) zum Ansteuern der identifizierten Kompressoren ausgestaltet ist, um die als Master klassifizierten Kompressoren nur dann zu betreiben, wenn ihre erfasste Ruhezeit seit dem letzten Betrieb einen vorbestimmten Ruhezeitwert erreicht hat oder wenn der erfasste Druckluftbedarf in dem wenigstens einen Druckluftreservoir (10) einen vorbestimmten Grenzwert überschreitet.

## Claims

1. Method for controlling a supply of compressed for rail vehicles, wherein
the supply of compressed air comprises at least one main air line, as a compressed-air reservoir (10) disposed in a rail vehicle or in a trainset comprising a purality of rail vehicles, for providing compressed air, and a plurality of compressors (12a..n) disposed in a rail vehicle or in a trainset comprising a purality of rail vehicles for supplying the at least one compressed-air reservoir (10) with compressed air, and comprising the follow steps:
- the identification (S100) of the available compressors (12a..n);
- the classification (S200) of the identified compressors (12a..n) as at least one master and at least one slave, and
- the operation (S300) of the identified compressors (12a..n) according to their classification as masters or slaves and dependent on a need for compressed air in the at least one compressed-air reservoir (10), wherein the compressors classified as masters are operated as a priority,
Wherein the classification of the identified compressors (12a..n) in step S200 is dependent on the compressor run times of the compressors (12a..n), on a performance capacity of the compressors (12a...n) or on a speed at which a need for compressed air is met.

2. Method according to claim 1, wherein
step S200 entailing the classification of the identified compressors (12a..n) is carried out again after a predefined period of time.

3. Method according to any one of the preceding claims, wherein
step S200 entailing the classification of the identified compressors contains a step entailing the determination of a number m of compressors to be classified as masters, wherein the number m of masters is less than the number n of compressors identified in step S100.

4. Method according to any of the preceding claims, wherein
steps S100 and S200 entailing the identification and classification of the compressors (12a..n) are carried out during the formation or re-formation of the supply of compressed air.

5. Method according to any one of the preceding claims, wherein
in step S300, the compressors classified as masters are operated only if the idle time since their last operation has reached a predefined idle time value or if the need for compressed air in the at least one compressed-air reservoir (10) exceeds a predefined limit value.

6. Method according to any one of the preceding claims, wherein
in step S300, if the compressors classified as masters are operated, the compressors classified as slaves are also put into operation dependent on the need for compressed air in the at least one compressed-air reservoir (10).

7. Method for controlling a supply of compressed for rail vehicles, wherein
the supply of compressed air comprises at least one main air line, as a compressed-air reservoir (10) disposed in a rail vehicle or in a trainset comprising a purality of rail vehicles, for providing compressed air, and a plurality of compressors (12a..n) disposed in a rail vehicle or in a trainset comprising a purality of rail vehicles, for supplying the at least one compressed-air reservoir (10) with compressed air, and comprising the following:
means (14) for identifying the available compressors (12a..n);
means (14) for classifying the identified compressors (12a..n) as at least one master and at least one slave;
at least one pressure detection device (16) for detecting a need for compressed air in the at least one compressed-air reservoir (10); and
means (14) for actuating the identified compressors (12a..n) according to their classification as masters or slaves and dependent on the detected need for compressed air in the at least one compressed-air reservoir (10), wherein the compressors classified as masters are operated as a priority;
wherein the means (14) for classifying the identified compressors (12a..n) as at least one master and at least one slave is configured to classify the identified compressors (12a..n) dependent on the compressor run times of the compressors (12a..n), on a performance capacity of the compressors (12a..n) or on a speed at which a need for compressed air is met.

8. Device according to claim 7, further comprising
means (14) for detecting the compressor run times of the identified compressors (12a..n),
wherein the means (14) for classifying the identified compressors is designed to classify the identified compressors as at least one master and at least one slave dependent on the detected compressor run times of the compressors (12a..n).

9. Device according to claim 7 or 8, further comprising
means (14) for detecting the idle times of the compressors (12a..n) since their last operation,
wherein the means (14) for actuating the identified compressors is designed to operate the compressors classified as masters only if the detected idle time since their last operation has reached a predefined idle time value or if the detected need for compressed air in the at least one compressed-air reservoir (10) exceeds a predefined limit value.

## Revendications

1. Procédé de réglage d'une alimentation en air comprimé de véhicules ferroviaires, l'alimentation en air comprimé ayant au moins un conduit d'air principal comme réservoir (10) d'air comprimé, disposé dans le véhicule ferroviaire ou dans un convoi de train composé de plusieurs véhicules ferroviaires, pour disposer d'air comprimé et plusieurs compresseurs (12a..n) disposés dans le véhicule ferroviaire ou dans un convoi de train composé de véhicules ferroviaires pour l'alimentation en air comprimé du au moins un réservoir (10) d'air comprimé, comprenant les stades :
- on identifie (S100) les compresseurs (12a..n) mis à disposition ;
- on classe (S200) les compresseurs (12a..n) identifiés en au moins un maître et en au moins un esclave, et
- on fait fonctionner (S300) les compresseurs (12a..n) identifiés conformément à leur classement en maîtres et esclaves et en fonction d'un besoin d'air comprimé dans le au moins un réservoir (10) d'air comprimé, les compresseurs classés en maître étant mis en fonctionnement prioritairement, dans lequel le classement des compresseurs (12a..n) identifiés s'effectue au stade S200 en fonction des temps de marche des compresseurs (12a..n), d'une capacité de puissance des compresseurs (12a..n) ou d'une rapidité de la satisfaction d'un besoin d'air comprimé.

2. Procédé suivant la revendication 1, dans lequel
on effectue de manière renouvelée, après une durée déterminée à l'avance, le stade S200 du classement des compresseurs (12a..n) identifiés.

3. Procédé suivant l'une des revendications précédentes, dans lequel
le stade S200 du classement des compresseurs identifiés comporte un stade de détermination d'un nombre m des compresseurs à classer comme maîtres, le nombre m des maîtres étant plus petit que le nombre n des compresseurs identifiés au stade S100.

4. Procédé suivant l'une des revendications précédentes, dans lequel
on effectue les stades S100 et S200 de l'identification et du classement des compresseurs (12a..n) lors d'une formation ou d'une reformation de l'alimentation en air comprimé.

5. Procédé suivant l'une des revendications précédentes, dans lequel,
dans le stade S300, on ne fait fonctionner les compresseurs classés comme maîtres que si leur temps de repos depuis le dernier fonctionnement a atteint une valeur de temps de repos déterminé à l'avance ou que si le besoin d'air comprimé dans le au moins un réservoir (10) d'air comprimé dépasse une valeur limite déterminée à l'avance.

6. Procédé suivant l'une des revendications précédentes, dans lequel,
dans le stade S300, si l'on fait fonctionner les compresseurs classés comme maîtres, on met, en fonction du besoin d'air comprimé dans le au moins un réservoir (10) d'air comprimé, en fonctionnement également les compresseurs classés comme esclaves.

7. Système de commande d'une alimentation en air comprimé de véhicules ferroviaires, l'alimentation en air comprimé ayant au moins un conduit d'air principal comme réservoir (10) d'air comprimé, disposé dans le véhicule ferroviaire ou dans un convoi de train composé de plusieurs véhicules ferroviaires, pour disposer d'air comprimé et plusieurs compresseurs (12a..n) disposés dans le véhicule ferroviaire ou dans un convoi de train composé de véhicules ferroviaires pour l'alimentation en air comprimé du au moins un réservoir (10) d'air comprimé comportant :
un moyen (14) d'identification des compresseurs (12a..n) mis à disposition ;
un moyen (14) de classement des compresseurs (12a..n) identifiés en au moins un maître et au moins un esclave ;
au moins un dispositif (16) de détection de la pression, pour détecter un besoin d'air comprimé dans le au moins un réservoir (10) d'air comprimé ; et
un moyen (14) de commande des compresseurs (12a..n) identifiés conformément à leur classement en maîtres et esclaves et en fonction du besoin d'air comprimé qui a été détecté dans le au moins un réservoir (10) d'air comprimé, dans lequel on fait fonctionner prioritairement les compresseurs classés comme maîtres ;
dans lequel le moyen (14) de classement des compresseurs (12a..n) identifiés en au moins un maître et en au moins un esclave est configuré de manière à effectuer le classement des compresseurs (12a..n) identifiés en fonction des temps de marche des compresseurs (12a..n), d'une capacité de puissance des compresseurs (12a..n) ou d'une rapidité de la satisfaction d'un besoin d'air comprimé.

8. Système suivant la revendication 7, comprenant en outre
un moyen (14) de détection des temps de marche des compresseurs (12a..n) identifiés,
dans lequel le moyen (14) de classement des compresseurs identifiés est conformé pour classer les compresseurs (12a..n) identifiés en fonction des temps de marche relevés des compresseurs (12a..n) en au moins un maître et en au moins un esclave.

9. Système suivant la revendication 7 ou 8, comprenant en outre
un moyen (14) de relevé des temps de repos des compresseurs (12a..n) depuis leur dernier fonctionnement,
dans lequel le moyen (14) de commande des compresseurs identifiés est conformé pour ne faire fonctionner les compresseurs classés comme maîtres que si leur temps de repos relevé depuis le dernier fonctionnement a atteint une valeur de temps de repos déterminé à l'avance ou que si le besoin d'air comprimé détecté dans le au moins un réservoir (10) d'air comprimé dépasse une valeur limite déterminée à l'avance.
